# EUROPEAN PATENT SPECIFICATION

(11) **EP 3 508 263 B1**
(45) Date of publication and mention of the grant of the patent: **19.08.2020**
(21) Application number: 18248238.0
(22) Date of filing: 28.12.2018
(51) Int. Cl.: B01D 39/16, B01D 39/20

(54) **ELECTROSPUN HIGH TEMPERATURE ELASTOMER MATERIALS FOR WATER FILTER MEDIA AND METHOD OF MAUFACTURING**
ELEKTROGESPONNENE HOCHTEMPERATURELASTOMERMATERIALIEN FÜR WASSERFILTERMEDIEN UND HERSTELLUNGSVERFAHREN
MATÉRIAUX ÉLASTOMÈRES ÉLECTROFILÉS À HAUTE TEMPÉRATURE POUR SUPPORT DE FILTRE À EAU ET PROCÉDÉ DE FABRICATION

(30) Priority: 03.01.2018 US 201815861498
(43) Date of publication of application: 10.07.2019
(73) Proprietor: Goodrich Corporation, Charlotte, NC 28217-4578 (US)
(72) Inventor: HU, Jin, Hudson, OH 44236 (US); SLANE, Casey, Richwood, OH 43344 (US)
(74) Representative: Dehns

(56) References cited:
- EP-A1- 2 392 395
- EP-A1- 2 801 400

## Description

### BACKGROUND

This application relates generally to water purification systems, and specifically to pathogen removing water filters.

Water filtration systems are used frequently on aircraft and other vehicles to ensure fresh water is available. There is market push to use more efficient microbiological water filter type filters for better water quality. Dual-ply filters, such as the filter disclosed in US Patent No. US 8,678,201 B2, use pathogen-catching media plies in conjunction with pathogen-killing media plies to create water filters with longer operation lifespans and higher efficiency pathogen filtration. However, such dual-ply water filters need to bond two or more plies together, preferably without adhesives, to avoid significantly blocking the pore structure of the water filter. Filters are also disclosed in EP 2 801 400.

### SUMMARY

A water filter media is provided as defined by claim 1.

A water filter cartridge includes a filter media a first cap sealingly engaged with the filter media, and a second cap sealingly engaged with the filter media opposite the first cap. The filter media is as defined above.

A method of making a water filter component is provided as defined by claim 10

### BRIEF DESCRIPTION OF THE DRAWINGS

FIG. 1 is a schematic diagram of a water purifying system for aircraft.
FIGS. 2A-2B are schematic diagrams of water filters containing water filter media with a pathogen-catching ply thermally bonded to a pathogen-killing ply made of electrospun high temperature thermoplastic elastomer material.
FIGS. 3A-3B are schematic diagrams of a method of making a water filter media containing a pathogen-killing ply made of electrospun high temperature elastomer material and a pathogen-catching ply.
FIGS. 4A-4B are schematic diagrams of a water filter media in varying embodiments.

### DETAILED DESCRIPTION

A water filter media that kills and catches pathogens typically includes multiple plies that accomplish different goals, such as catching pathogens or killing pathogens. These plies work more efficiently if they are joined together in water filter media. Often, adhesives are used to join multiple plies. However, these adhesives prevent or reduce water flow through multi-ply media. Alternatively, in this disclosure, a dual-ply media uses a thermal bond to secure multiple plies together without blocking water flow.

In this dual-ply water filter media, the pathogen-killing and pathogen-catching plies are attached with a spunbond porous scrim layer and are thermally bonded such that a high temperature thermoplastic elastomer layer in the pathogen-killing ply bonds to the pathogen-catching ply through the pores of the scrim layer between. Thus, the electrospun high temperature thermoplastic elastomer layer and scrim layer allow for water flow through the media. In contrast, traditional methods of adhesion have the potential to block pore and passages through which water would flow in filter media

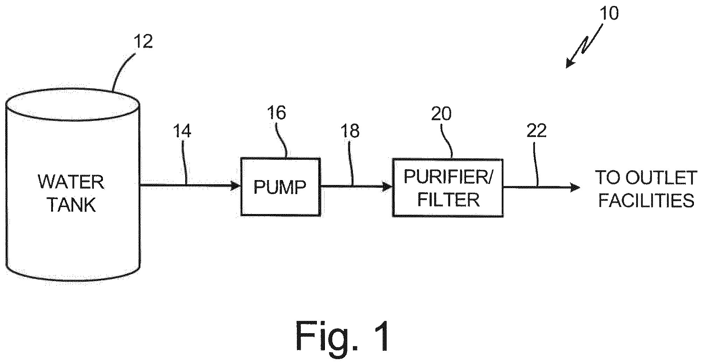

FIG. 1 is a schematic diagram depicting water filter system 10 for use on aircraft. System 10 can be a potable water system for use in a vehicle. System 10 includes water tank 12, water tank line 14, pump 16, pump line 18, water filter or filter 20, and output line 22. System 10 can be, for example, a water purifier system that reaches standard 99.9999% bacteria reduction, 99.99% virus reduction, and 99.95% cyst reduction, but alternatively can be a filter system that does not reach these purifier standards but still accomplishes significant pathogen and particle reduction.

Water tank 12 stores water needing to be filtered or purified. Pump 16 pumps water from tank 12 along water tank line 14 to pump line 18, and to water filter 20. In water filter 20, water is purified of pathogens. Once purified, water is flowed through output line 22 for use elsewhere in the vehicle. System 10 can optionally include more water tanks, pumps, valves, or other lines between water tank 12 and water filter 20. System 10 can also include other types of filters, such as particulate filters, upstream of water filter 20.

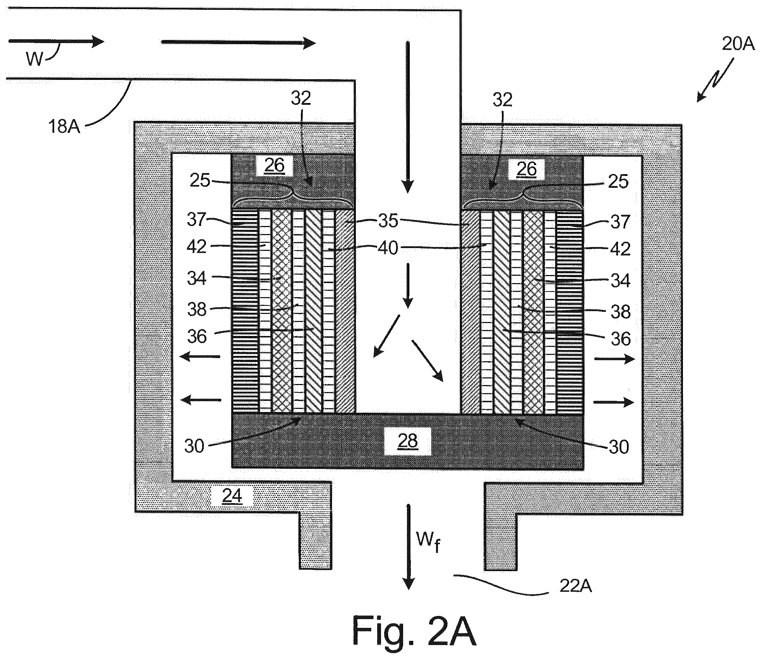

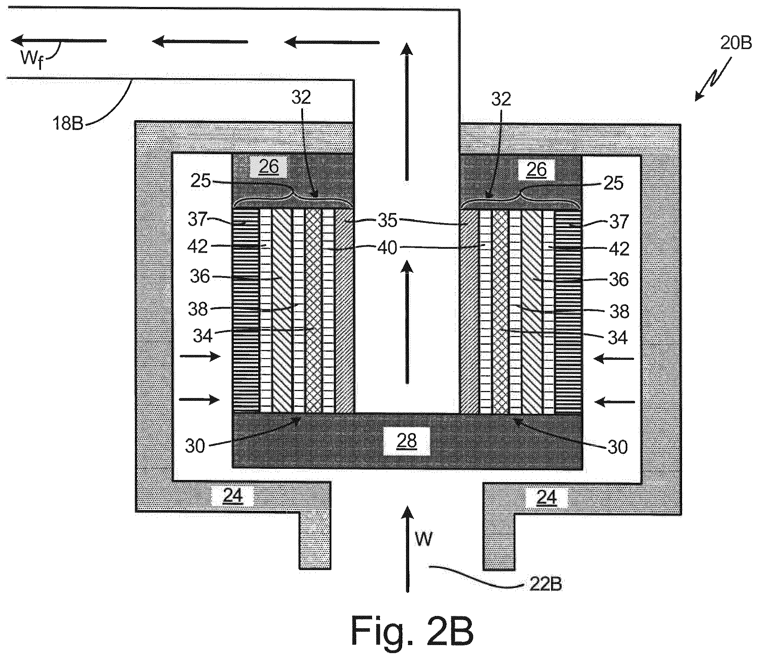

FIG. 2A is a schematic diagram of water filter 20A, while FIG. 2B is a schematic diagram of water filter 20B. Both filters contain the same components, but the flow of water (W) in each is reversed. Thus, the components of filters 20A, 20B, will be discussed together. Water filter 20A includes inlet 18A, outlet 22A, housing 24, and cartridge 25. Cartridge 25 includes first cap 26, second cap 28, and media 30. Media 30 contains pathogen-killing ply 32 made of electrospun high temperature thermoplastic elastomer material and pathogen-catching ply 34 made of a pathogen-catching material. In FIG. 2A, filter 20A also includes inner core 35 and external cage 37 for structural strength. In other embodiments, cage 37 is optional.

Housing 24 encloses cartridge 25 from an external environment. Housing 24 is connected to inlet 18A, which inputs water W into filter 20A (from water tank 12 in FIG. 1), and output 22A, which directs filtered water W_{f} to other uses. Housing 24 is connected to cap 26, and pumps unfiltered water W through cap 26 into cartridge 25.

Cartridge 25 includes first cap 26, second cap 28, and media 30, which includes pathogen-killing ply 32 and pathogen-catching ply 34. First and second caps 26, 28, are plastic caps which seal and encapsulate cartridge 25. First and second caps 26, 28, are circular in shape and seal to cylindrical media 30. In FIG. 2A, cap 26 protrudes from cartridge 25 to provide access to pump line 18A and incoming water W that needs to be filtered. Cap 28, in contrast, is solid and seals a bottom end of cartridge 25. Water W runs from pump line 18A through housing 24 and cap 28 into cartridge 25.

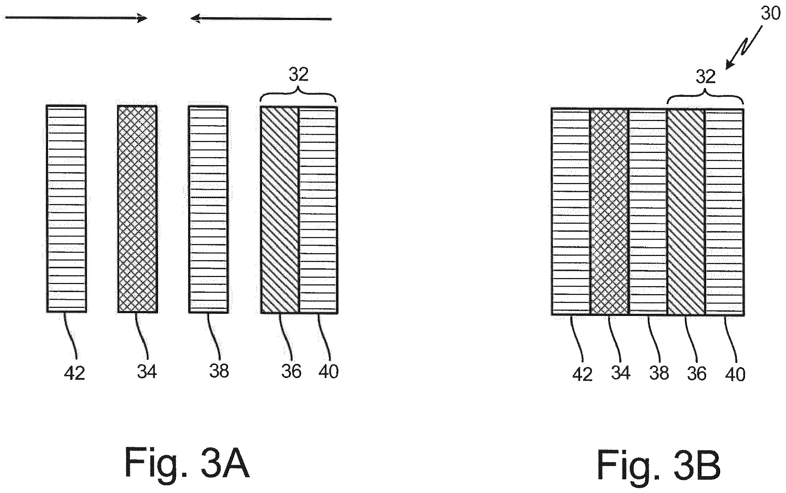

Media 30 is a cylindrical shaped water filter media that both catches and kills pathogens. In FIG. 2A, media 30 contains pathogen-killing ply 32 and pathogen-catching ply 34. Pathogen-killing ply 32 and pathogen-catching ply 34 are prepared into Media 30 as shown in FIGS. 3A-3B. Media 30 additionally includes electrospun layer 36, and scrim layers 38, 40, and 42. Media 30 is surrounded by and supported by core 35 and cage 37.

Pathogen-killing ply 32 is made of a pathogen-killing media, such as biocidal material. In water filter 20A, pathogen-killing ply 32 is made of electrospun layer 36 on scrim layer 40. Electrospun layer 36 is made of a high temperature thermoplastic elastomer and loaded with biocides. Electrospun layer 36 is created through electrospinning the biocide-loaded high temperature thermoplastic elastomer onto scrim layer 40. Scrim layer 40 is a polyester fabric that supports electrospun layer 36.

Electrospinning generally uses an electrical charge to draw very fine (typically on the micro or nano scale) fibers from a polymer solution. Electrospinning shares characteristics of both electrospraying and conventional solution dry spinning of fibers. The process is non-invasive and does not require the use of coagulation chemistry or high temperatures to produce solid threads from solution. Further, electrospinning from molten precursors has also been practiced in this art, which ensures that no solvent can be carried over into the final product.

A system for performing electrospinning generally includes a spinneret that is connected to a high-voltage direct current power supply, a syringe pump, and a grounded collector. Design of an applicable electrospinning process depends upon many factors, including, such as, molecular weight, molecular-weight distribution and architecture (e.g., branched, linear etc.) of the fibers, solution properties (e.g., viscosity, conductivity, and surface tension), electric potential, flow rate and concentration, distance between the capillary and collection screen, ambient parameters (e.g., temperature, humidity and air velocity in the chamber), and motion of target screen (collector).

The electrospun material used for pathogen-killing ply 32 can include a thermoplastic elastomer such as thermoplastic polyurethanes (TPU), styrenic block copolymers (TPS (TPE-s)), thermoplastic polyolefinelastomers (TPO (TPE-o)), thermoplastic vulcanizates (TPV (TPE-v or TPV)), thermoplastic copolyester (TPC (TPE-E)), thermoplastic polyamides (TPA (TPE-A)), or other thermoplastic elastomers with high melting temperatures such that the material does not completely liquefy during thermal lamination.

Here, pathogen-killing ply 32 includes an electrospun high temperature thermoplastic elastomer that is pre-loaded with biocides. A biocide a chemical substance or microorganism which exerts a controlling effect on any harmful organism by chemical or biological means. The biocidal agents can be, for example, sodium dichloro-s-triazinetrione (dihydrate or anhydrous; "dichlor"), trichloro-s-triazinetrione ("trichlor"), halogenated hydantoin compounds, nanoparticles of copper and its alloys (e.g., brasses, bronzes, cupronickel, copper-nickel-zinc, etc.), silver nanoparticles and its derivativesor, quaternary ammonium compounds, and silica nanoparticles chemically bound with silyl quaternary amine.

Scrim layer 40 is typically a highly porous spunbond thin fabric onto which the high temperature elastomer (loaded with biocides) is spun. Scrim layer 40 alloys for easier handling of thin electrospun layer 36. Additionally, electrospun layer 36 can be attached to scrim layer 38, which lays between electrospun layer 36 and pathogen-catching ply 34. Scrim layer 38 is also a spunbond thin fabric such as a polyester fabric. The porous nature of scrim layer 38 allows electrospun layer 36 to seep through pores in scrim layer 38 to attach to pathogen-catching ply 34, creating a thermal bond between electrospun layer 36, scrim layer 38, and pathogen-catching ply 34. In media 30, scrim layer 38 bonds to both pathogen-catching ply 34 and pathogen-killing ply 32.

The melting temperature of the thermoplastic elastomer electrospun onto pathogen-killing ply 32 should be higher than, but close to the laminating temperature used to connect plies 32, 34, through scrim layer 38. Thus, the thermoplastic elastomer will not melt, but will be softened to facilitate thermal bonding through the porous structure of scrim layer 38. Scrim layer 38 (which typically is spunbond) is thermally bonded to both plies providing additional attachment.

Pathogen-catching ply 34 is made of a pathogen-catching medium. Typically, pathogen-catching ply 34 can be alumina or glass fiber fabric optionally with an activated carbon component, or other electropositive or electroadsorptive material that can catch pathogens in water W. An electropositive material can include, for example, pseudoboehmite AIO(OH), or alumina. Alumina particles are electroadsorptive, and are able to catch pathogen particles via the inherent charge field extending across the void volume of the pores of glass fiber fabric. The pathogen-catching ply can alternatively be size exclusion capability of microfiltration (MF) or ultrafiltration (UF) membranes or nanofiltration (NF), or electroadsorptive media. An example of an appropriate electroadsorptive media is Disruptor® media (available from AHLSTROM MUNKSJÖ). Disruptor® medias have non-woven glass fibers fabric, where glass fibers are coated with nano alumina fibers.

Media 30 has several benefits. First, the use of a high temperature elastomer in electrospun layer 36 allows for creation of a thermal bond to pathogen-catching ply 34 without significantly affecting pore size or structure in media 30. In contrast, traditional adhesive block pore structures in filter media and prevent water flow. This often results in significantly increasing the water pressure drops. Thus, the flow rate of water through pathogen-killing ply 32 and pathogen-catching ply 34 is minimally reduced. Additionally, pathogen-killing ply 32 does not shed or create debris in water running through filter 20. Pathogen-killing ply 32 is made of a high strength continuous elastomer fibers to form a fabric by electrospinning, so fibers are less likely to break off and enter the water stream to prevent escape of the biocide-containing debrides.

Media 30 can optionally include external scrim layer 42 which can be made of a polyester fabric. Scrim layer 42 provides surface protection to pathogen-catching ply 34 within cartridge 25. In some embodiments, pathogen-catching ply 34 can be bonded to scrim layer 42, or come prepared on scrim layer 42 prior to assembly of media 30. In these embodiments, scrim layer 42 aids in handling of pathogen-catching ply 34. Both scrim layers 38 and 42 can optionally be pre-laminated onto pathogen-catching ply 34 before pathogen-killing ply 32 is bonded to the rest of media 30, or all layers 32-42 can be simultaneously thermally laminated in media 30.

Media 30 is typically cylindrical in shape such that media 30 can seal with caps 26, 28, to form cartridge 25. Additionally, media 30 can include additional plies, such as additional pathogen-killing or pathogen-catching plies, or chemical or dirt retaining plies that can be thermally bonded in a similar fashion. In FIG. 2A, media 30 is surrounded by and supported by core 35 and cage 37. Core 35 and cage 37 provide structural, not functional, support to media 30. Both core 35 and cage 37 have large screen holes for water to pass through into media 30.

In cartridge 25 of filter 20A, water flows in the direction of arrows W, entering from inlet 18A (shown in FIG. 1 as pump line 18). When water enters filter 20A, it passes through cap 26 (Figure 2A) into the body of cartridge 25 which is cylindrical in shape. To exit cartridge 25, water must flow through media 30. When water flows through media 30, pathogens are killed or caught and do not flow outside of media 30. The caught pathogens will also be reduced and controlled by the pathogen-killing media, reducing the chance of biofouling. Filtered water W_{f} flows out of the cylindrical section to output line 22, and is used elsewhere.

Alternatively, water flow can be reversed. In FIG. 2B, water filter 20B includes outlet 18B, inlet 22B, housing 24, and cartridge 25. Cartridge 25 includes first cap 26, second cap 28, and media 30. The components 24, 25, 26, 28, 30 are the same as in FIG. 2A. However, water flow is reversed. When water enters filter 20B, it passes through media 30 into the body of cartridge 25 which is cylindrical in shape. When water flows through media 30, pathogens are killed or caught and do not flow outside of media 30. The caught pathogens will also be reduced and controlled by the pathogen-killing media, reducing the chance of biofouling. To exit cartridge 25, water must flow through cap 26 to outlet 18B. Filtered water W_{f} flows out of the cylindrical section to output 18B, and is used elsewhere.

FIGS. 3A-3B are a schematic diagrams of a method of making water filter media 30 containing pathogen-killing ply 32 made of electrospun high temperature elastomer material and pathogen-catching ply 34. FIGS. 3A shows separate layers 32-42, including pathogen-killing ply 32 (containing biocide-loaded electrospun high temperature thermoplastic elastomer layer 36 and scrim layer 40), pathogen-catching ply 34, and scrim layers 38, 42.

The layers are overlaid and thermally bound to create the final media 30 in FIG. 3B. The layers can be, for example, laminated or autoclaved to thermally bind pathogen-killing ply 32 to pathogen-catching ply 34. The porous nature of scrim layer 38 allows electrospun layer 36 to seep through pores in scrim layer 38 to attach to pathogen-catching ply 34, creating a thermal bond between electrospun layer 36, scrim layer 38, and pathogen-catching ply 34. Optionally, additional plies of pathogen-catching, pathogen-killing, or other types of filter media plies can be thermally bonded in a similar fashion. For example, chemical or dirt catching layers can be added to create more complex multi-ply water filter media structures.

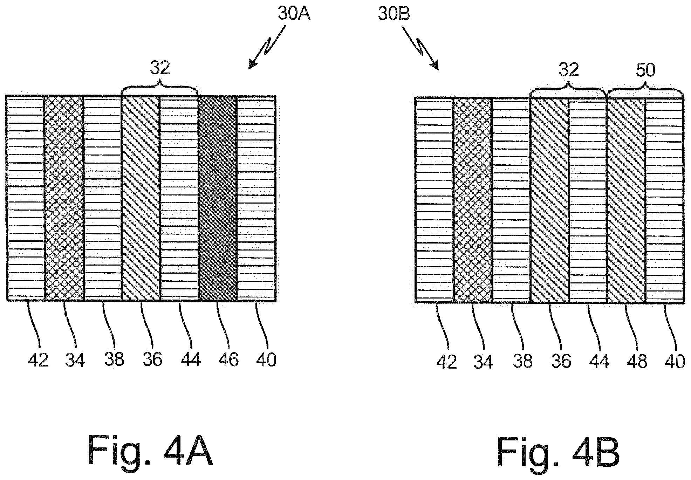

FIGS. 4A-4B are schematic diagrams of a water filter media in varying embodiments. FIG. 4A shows an embodiment of water filter media 30A with chemical holding or dirt filter ply 46. Filter media 30A includes pathogen-killing ply 32 (containing electrospun layer 36 and scrim layer 40), pathogen-catching ply 34, external scrim layers 40, 42, additional scrim layer 44, and chemical holding or dirt filter ply 46. Chemical holding or dirt filter ply 46 can further filter water W coming into filter 20A (shown in FIG. 2A) by removing harmful chemical or debris during filtration of water W passing through cartridge 25. Chemical holding or dirt filter ply 46 is attached to pathogen-killing ply 32 through scrim layer 44.

FIG. 4B shows an embodiment of water filter media 30B with a second pathogen-killing ply 50. Filter media 30B includes pathogen-killing ply 32 (containing electrospun layer 36 and scrim layer 40), pathogen-catching ply 34, external scrim layers 40, 42, and second pathogen-killing ply 50 (including additional scrim layer 44 and second electrospun layer 48). Second pathogen-killing ply 50 allows for extra filtration of pathogens from water flowing through water filter 20. The materials used for these plies are discussed in more detail with reference to FIGS. 2, 3A and 3B.

The proposed multi-ply water filter media includes a method of bonding pathogen-killing plies containing electrospun high temperature thermoplastic elastomers to pathogen-catching plies with thermal bonding techniques. This allows for bonding of plies without using adhesive, and does not clog or block water paths through filter media, ensuring water filter efficiency and preventing drops in water pressure. Additionally, the use of high strength electrospun elastomers prevents biocidal debris formation, as high strength electrospun elastomer loaded with biocides do not shed like other brittle fabrics or short fiber fabrics used in water filter systems. This is because that the electrospinning fibers are known to have almost perfect non-stop fibers and the elastomer provides stretching capability to resist fibers damages by usual handling.

### Discussion of Possible Embodiments

The following are non-exclusive descriptions of possible embodiments of the present invention.

A water filter media includes a pathogen-killing ply and a pathogen-catching ply that is thermally bound to an electrospun thermoplastic elastomer layer opposite a structural scrim layer. The pathogen-killing ply includes the structural scrim layer, and the electrospun thermoplastic elastomer layer is attached to the structural scrim layer. The electrospun thermoplastic elastomer layer contains biocides.

The media of the preceding paragraph can optionally include, additionally and/or alternatively, any one or more of the following features, configurations and/or additional components:

The electrospun thermoplastic elastomer layer is selected from the group consisting of a thermoplastic elastomer polyurethane, a styrenic block copolymer, a thermoplastic polyolefinelastomer, a thermoplastic copolyester, and a thermoplastic polyamide.

The biocides are selected from the group consisting of sodium dichloro-s-triazinetrione, trichloro-s-triazinetrione, halogenated hydantoin compounds, quaternary ammonium compounds, silica nanoparticles chemically bound with silyl quaternary amine, copper, copper alloys, silver, silver nanoparticles, and silver derivatives.

The pathogen-catching ply is selected from the group consisting of electroadsorptive nano-alumina fabric, and glass fiber fabric.

The pathogen-catching ply further comprises activated carbon.

The pathogen-catching ply is selected from the group consisting of microfiltration membranes, ultrafiltration membranes, and nanofiltration membranes.

The water filter media includes a middle scrim layer through which the pathogen-catching ply is thermally bonded to the pathogen-killing ply.

The middle scrim layer is a non-woven fabric selected from the group consisting of nylon, polyester, polypropylene, and combinations thereof.

The water filter media includes an external scrim layer attached to the pathogen-catching ply opposite the pathogen-killing ply.

A water filter cartridge includes a filter media a first cap sealingly engaged with the filter media, and a second cap sealingly engaged with the filter media opposite the first cap. The filter media includes a pathogen-killing ply and a pathogen-catching ply thermally bonded to the pathogen-killing ply opposite a structural scrim layer. The pathogen-killing ply includes a biocide-loaded high temperature electrospun material on a structural scrim layer.

The water filter cartridge of the preceding paragraph can optionally include, additionally and/or alternatively, any one or more of the following features, configurations and/or additional components:

The water filter cartridge includes a porous scrim layer between the pathogen-killing ply and the pathogen-catching ply.

The high temperature thermoplastic electrospun material is selected from the group consisting of a thermoplastic elastomer polyurethane, a styrenic block copolymer, a thermoplastic polyolefinelastomer, a thermoplastic copolyester, and a thermoplastic polyamide.

The pathogen-catching ply comprises nano-alumina and activated carbon.

The filter media further comprises one or more external scrim layers attached to the pathogen-killing ply or the pathogen-catching ply.

A method of making a water filter component includes electrospinning a biocide-loaded high temperature elastomer material onto a scrim layer to create a pathogen-killing ply, aligning the pathogen-killing ply with a pathogen-catching ply, and thermally bonding the pathogen-killing ply and the pathogen-catching ply together.

The method of the preceding paragraph can optionally include, additionally and/or alternatively, any one or more of the following features, configurations and/or additional components:

Thermally bonding the pathogen-killing ply and the pathogen-catching ply together comprises laminating.

Thermally bonding the pathogen-killing ply and the pathogen-catching ply together comprises using an autoclave.

The method includes sealing the pathogen-killing ply and the pathogen-catching ply to a cap.

Sealing the pathogen-killing ply and the pathogen-catching ply to a cap comprises thermal sealing.

Sealing the pathogen-killing ply and the pathogen-catching ply to a cap comprises using an adhesive.

While the invention has been described with reference to an exemplary embodiment(s), it will be understood by those skilled in the art that various changes may be made and equivalents may be substituted for elements thereof without departing from the scope of the claims. Therefore, it is intended that the invention not be limited to the particular embodiment(s) disclosed, but that the invention will include all embodiments falling within the scope of the appended claims.

## Claims

1. A water filter media comprising:
a pathogen-killing ply (32) comprising:
a structural scrim layer (40), and
an electrospun thermoplastic elastomer layer (36) spun onto the structural scrim layer, wherein the electrospun thermoplastic elastomer layer (36) comprises biocides;
a second scrim layer (38) attached to the electrospun thermoplastic layer (36) opposite the structural scrim layer (40); and
a pathogen-catching ply (34) that is thermally bound to the electrospun thermoplastic elastomer layer (36) such that the electrospun thermoplastic layer (36) is attached to the pathogen-catching ply (34) through pores in the second scrim layer (38);
wherein the melting temperature of the electrospun thermoplastic layer (36) is higher than, but close to the temperature used to thermally bond the pathogen-catching ply (34) to the electrospun thermoplastic elastomer layer (36) through pores in the second scrim layer (38).

2. The water filter media of claim 1, wherein the electrospun thermoplastic elastomer layer is selected from the group consisting of a thermoplastic elastomer polyurethane, a styrenic block copolymer, a thermoplastic polyolefin elastomer, a thermoplastic copolyester, and a thermoplastic polyamide.

3. The water filter media of claim 1 or 2, wherein the biocides are selected from the group consisting of sodium dichloro-s-triazinetrione, trichloro-s-triazinetrione, halogenated hydantoin compounds, quaternary ammonium compound,, copper, copper alloys, silver, and silver nanoparticles.

4. The water filter media of any preceding claim, wherein the pathogen-catching ply (34) is selected from the group consisting of electroadsorptive nano-alumina fabric, and glass fiber fabric.

5. The water filter media of claim 4, wherein the pathogen-catching ply further comprises activated carbon.

6. The water filter media of any preceding claim, wherein the pathogen-catching ply is selected from the group consisting of microfiltration membranes, ultrafiltration membranes, and nanofiltration membranes.

7. The water filter media of any preceding claim, wherein the second scrim layer is a non-woven fabric selected from the group consisting of nylon, polyester, polypropylene, and combinations thereof.

8. The water filter media of any preceding claim, further comprising an external scrim layer (42) attached to the pathogen-catching ply opposite the pathogen-killing ply.

9. A water filter cartridge comprising:
a filter media (30) as claimed in any preceding claim;
a first cap (26) sealingly engaged with the filter media; and
a second cap (28) sealingly engaged with the filter media opposite the first cap.

10. A method of making a water filter component comprises:
electrospinning a biocide-loaded thermoplastic elastomer material onto a structural scrim layer to create a pathogen-killing ply;
aligning a second scrim layer with the pathogen-killing ply opposite the structural scrim layer;
aligning a pathogen-catching ply with the second scrim layer; and
thermally bonding the pathogen-killing ply and the pathogen-catching ply together through pores in the second scrim layer,
wherein the melting temperature of the biocide-loaded thermoplastic elastomer material is higher than then, but close to the temperature used to thermally bond the pathogen-killing ply to the pathogen-catching ply through pores in the second scrim layer.

11. The method of claim 10, wherein thermally bonding the pathogen-killing ply and the pathogen-catching ply together comprises laminating, or wherein thermally bonding the pathogen-killing ply and the pathogen-catching ply together comprises using an autoclave.

12. The method of claim 10 or 11, further comprising sealing the pathogen-killing ply and the pathogen-catching ply to two end caps.

13. The method of claim 12, wherein sealing the pathogen-killing ply and the pathogen-catching ply to the two end caps comprises thermal sealing, or wherein sealing the pathogen-killing ply and the pathogen-catching ply to the two end caps comprises using an adhesive.

## Patentansprüche

1. Wasserfiltermedium, umfassend:
eine Pathogenabtötungsschicht (32), umfassend:
eine strukturelle Gitterstoffschicht (40) und
eine elektrogesponnene thermoplastische Elastomerschicht (36), die auf die strukturelle Gitterstoffschicht gesponnen ist, wobei die elektrogesponnene thermoplastische Elastomerschicht (36) Biozide umfasst;
eine zweite Gitterstoffschicht (38), die gegenüber der strukturellen Gitterstoffschicht (40) an der elektrogesponnenen thermoplastischen Schicht (36) angebracht ist; und
eine Pathogenauffanglage (34), die derart thermisch an die elektrogesponnene thermoplastische Elastomerschicht (36) gebunden ist, dass die elektrogesponnene thermoplastische Schicht (36) durch Poren in der zweiten Gitterstoffschicht (38) an der Pathogenauffanglage (34) angebracht ist;
wobei die Schmelztemperatur der elektrogesponnenen thermoplastischen Schicht (36) größer, jedoch nahe der Temperatur ist, die verwendet wird, um die Pathogenauffanglage (34) durch Poren in der zweiten Gitterstoffschicht (38) an die elektrogesponnenen thermoplastische Elastomerschicht (36) zu binden.

2. Wasserfiltermedium nach Anspruch 1, wobei die elektrogesponnene thermoplastische Elastomerschicht aus der Gruppe ausgewählt ist, die aus Folgendem besteht: einem thermoplastischen Elastomerpolyurethan, einem Styrol-Blockcopolymer, einem thermoplastischen Polyolefinelastomer, einem thermoplastischen Copolyester und einem thermoplastischen Polyamid.

3. Wasserfiltermedium nach Anspruch 1 oder 2, wobei die Biozide aus der Gruppe ausgewählt sind, die aus Folgendem besteht: Natrium-dichlor-s-triazintrion, Trichlor-s-triazintrion, halogenisierten Hydantionverbindungen, einer quartären Ammoniumverbindung, Kupfer, Kupferlegierungen, Silber und Silbernanopartikeln.

4. Wasserfiltermedium nach einem der vorangehenden Ansprüche, wobei die Pathogenauffanglage (34) aus der Gruppe ausgewählt ist, die aus einem elektroadsorptiven Nanoaluminiumstoff und einem Glasfaserstoff besteht.

5. Wasserfiltermedium nach Anspruch 4, wobei die Pathogenauffanglage ferner Aktivkohle umfasst.

6. Wasserfiltermedium nach einem der vorangehenden Ansprüche, wobei die Pathogenauffanglage aus der Gruppe ausgewählt ist, die aus Folgendem besteht: Mikrofiltrationsmembranen, Ultrafiltrationsmembranen und Nanofiltrationsmembranen.

7. Wasserfiltermedium nach einem der vorangehenden Ansprüche, wobei die zweite Gitterstoffschicht ein nichtgewebter Stoff ist, der aus der Gruppe ausgewählt ist, die aus Folgendem besteht: Nylon, Polyester, Polypropylen und Kombinationen davon.

8. Wasserfiltermedium nach einem der vorangehenden Ansprüche, ferner umfassend eine äußeren Gitterstoffschicht (42), die gegenüber der Pathogenabtötungslage an der Pathogenauffanglage angebracht ist.

9. Wasserfilterkassette, umfassend:
ein Filtermedium (30) nach einem der vorangehenden Ansprüche;
eine erste Kappe (26), die dichtend in das erste Filtermedium eingreift; und
eine zweite Kappe (28), die gegenüber der ersten Kappe dichtend in das Filtermedium eingreift.

10. Verfahren zum Herstellen einer Wasserfilterkomponente, umfassend:
Elektrospinnen eines biozidhaltigen thermoplastischen Elastomermaterials auf eine strukturelle Gitterstoffschicht, um eine Pathogenabtötungslage zu erzeugen;
Ausrichten einer zweiten Gitterstoffschicht mit der Pathogenabtötungslage gegenüber der strukturellen Gitterstoffschicht;
Ausrichten einer Pathogenauffanglage mit der zweiten Gitterstoffschicht; und
thermisches Binden der Pathogenabtötungslage durch Poren in der zweiten Gitterstoffschicht an die Pathogenauffanglage,
wobei die Schmelztemperatur des biozidhaltigen thermoplastische Elastomermaterials größer, jedoch nahe der Temperatur ist, die verwendet wird, um die Pathogenabtötungslage durch Poren in der zweiten Gitterstoffschicht thermisch an die Pathogenauffanglage zu binden.

11. Verfahren nach Anspruch 10, wobei das thermische Binden der Pathogenabtötungslage an die Pathogenauffanglage Laminieren umfasst oder wobei das thermische Binden der Pathogenabtötungslage an die Pathogenauffanglage Verwenden eines Autoklavs umfasst.

12. Verfahren nach Anspruch 10 oder 11, ferner umfassend Abdichten der Pathogenabtötungslage und der Pathogenauffanglage an zwei Endkappen.

13. Verfahren nach Anspruch 12, wobei das Abdichten der Pathogenabtötungslage und der Pathogenauffanglage an den zwei Endkappen thermisches Abdichten umfasst oder wobei das Abdichten der Pathogenabtötungslage und der Pathogenauffanglage an den zwei Endkappen Verwenden eines Klebstoffes umfasst.

## Revendications

1. Support de filtre à eau comprenant :
un pli de destruction d'agents pathogènes (32) comprenant :
une couche de canevas structurelle (40), et
une couche d'élastomère thermoplastique électrofilée (36) filée sur la couche de canevas structurelle, dans lequel la couche d'élastomère thermoplastique électrofilée (36) comprend des biocides ;
une seconde couche de canevas (38) fixée à la couche thermoplastique électrofilée (36) opposée à la couche de canevas structurelle (40) ; et
un pli de capture d'agents pathogènes (34) qui est lié thermiquement à la couche d'élastomère thermoplastique électrofilée (36) de sorte que la couche thermoplastique électrofilée (36) est fixée au pli de capture d'agents pathogènes (34) à travers des pores dans la seconde couche de canevas (38) ;
dans lequel la température de fusion de la couche thermoplastique électrofilée (36) est supérieure à, mais proche de la température utilisée pour lier thermiquement le pli de capture d'agents pathogènes (34) à la couche élastomère thermoplastique électrofilée (36) à travers des pores dans la seconde couche de canevas (38).

2. Support de filtre à eau selon la revendication 1, dans lequel la couche d'élastomère thermoplastique électrofilée est choisie dans le groupe constitué d'un polyuréthane élastomère thermoplastique, d'un copolymère séquencé styrénique, d'un élastomère polyoléfine thermoplastique, d'un copolyester thermoplastique et d'un polyamide thermoplastique.

3. Support de filtre à eau selon la revendication 1 ou 2, dans lequel les biocides sont choisis dans le groupe constitué de dichloro-s-triazinetrione de sodium, de trichloro-s-triazinetrione, de composés à base d'hydantoïne halogénée, de composé d'ammonium quaternaire, de cuivre, d'alliages de cuivre, d'argent et de nanoparticules d'argent.

4. Support de filtre à eau selon une quelconque revendication précédente, dans lequel le pli de capture d'agents pathogènes (34) est choisi dans le groupe constitué d'un tissu de nanoalumine électro-absorbante et d'un tissu en fibre de verre.

5. Support de filtre à eau selon la revendication 4, dans lequel le pli de capture d'agents pathogènes comprend en outre du charbon actif.

6. Support de filtre à eau selon une quelconque revendication précédente, dans lequel le pli de capture d'agents pathogènes est choisi dans le groupe constitué de membranes de microfiltration, de membranes d'ultrafiltration et de membranes de nanofiltration.

7. Support de filtre à eau selon une quelconque revendication précédente, dans lequel la seconde couche de canevas est un tissu non tissé choisi dans le groupe constitué de nylon, de polyester, de polypropylène et de leurs combinaisons.

8. Support de filtre à eau selon une quelconque revendication précédente, comprenant en outre une couche de canevas externe (42) fixée au pli de capture d'agents pathogènes opposé au pli de destruction d'agents pathogènes.

9. Cartouche de filtre à eau comprenant :
un support de filtre (30) selon une quelconque revendication précédente ;
un premier bouchon (26) en prise de manière étanche avec le support de filtre ; et
un second bouchon (28) en prise de manière étanche avec le support de filtre opposé au premier bouchon.

10. Procédé de fabrication d'un composant de filtre à eau comprenant :
l'électrofilage d'un matériau élastomère thermoplastique chargé de biocides sur une couche de canevas structurelle pour créer un pli de destruction d'agents pathogènes ;
l'alignement d'une seconde couche de canevas avec le pli de destruction d'agents pathogènes opposé à la couche de canevas structurelle ;
l'alignement d'un pli de capture d'agents pathogènes avec la seconde couche de canevas ; et
la liaison thermique du pli de destruction d'agents pathogènes et du pli de capture d'agents pathogènes ensemble à travers des pores dans la seconde couche de canevas,
dans lequel la température de fusion du matériau élastomère thermoplastique chargé de biocides est supérieure à, mais proche de la température utilisée pour lier thermiquement le pli de destruction d'agents pathogènes au pli de capture d'agents pathogènes à travers des pores dans la seconde couche de canevas.

11. Procédé selon la revendication 10, dans lequel la liaison thermique du pli de destruction d'agents pathogènes et du pli de capture d'agents pathogènes ensemble comprend la stratification, ou dans lequel la liaison thermique du pli de destruction d'agents pathogènes et du pli de capture d'agents pathogènes ensemble comprend l'utilisation d'un autoclave.

12. Procédé selon la revendication 10 ou 11, comprenant en outre le scellement du pli de destruction d'agents pathogènes et du pli de capture d'agents pathogènes sur deux bouchons d'extrémité.

13. Procédé selon la revendication 12, dans lequel le scellement du pli de destruction d'agents pathogènes et du pli de capture d'agents pathogènes sur les deux bouchons d'extrémité comprend un scellement thermique, ou dans lequel le scellement du pli de destruction d'agents pathogènes et du pli de capture d'agents pathogènes sur les deux bouchons d'extrémité comprend l'utilisation d'un adhésif.
